(19)

Europäisches
Patentamt

European
Patent Office

Office européen
des brevets

(11) EP 2 813 843 B1

(12) **EUROPEAN PATENT SPECIFICATION**

(45) Date of publication and mention
of the grant of the patent:
**02.12.2015 Bulletin 2015/49**

(51) Int Cl.:
**G01N 27/404** (2006.01)

(21) Application number: **13171931.2**

(22) Date of filing: **13.06.2013**

(54) **Long-life, lead-free, oxygen galvanic sensor**

Langlebiger, bleifreier, galvanischer Sauerstoffsensor

Capteur galvanique d'oxygène, sans plomb, de longue durée

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**17.12.2014 Bulletin 2014/51**

(73) Proprietor: **Honeywell International Inc.**
**Morristown, NJ 07962-2245 (US)**

(72) Inventors:
• **Cobianu, Cornel P.**
**051434 Bucharest (RO)**
• **Serban, Bogdan Catalin**
**60000 Bucharest (RO)**
• **Avramescu, Viorel**
**030342 Bucharest (RO)**
• **Hobbs, Bryan**
**West Sussex, BN18 0AS (GB)**
• **Pratt, Keith Frances Edwin**
**Hampshire, P06 1PT (GB)**
• **Willett, Martin**
**Hampshire, P08 0XT (GB)**

(74) Representative: **Houghton, Mark Phillip**
**Patent Outsourcing Limited**
**1 King Street**
**Bakewell, Derbyshire DE45 1DZ (GB)**

(56) References cited:
WO-A1-2013/039414    WO-A1-2013/049752
GB-A- 2 178 540    US-A- 2 805 191

• **CORNEL COBIANU ET AL: "Lead-free galvanic oxygen sensors A conceptual approach", SEMICONDUCTOR CONFERENCE (CAS), 2012 INTERNATIONAL, IEEE, 15 October 2012 (2012-10-15), pages 161-164, XP032296369, DOI: 10.1109/SMICND.2012.6400667 ISBN: 978-1-4673-0737-6**
• **"ACADEMY OF ROMANIAN SCIENTISTS A N N A L S SERIES ON SCIENCE AND TECHNOLOGY OF INFORMATION VOLUME 5 2012 NUMBER 2 ONLINE EDITION ISSN 2066 -8562 TOPICS: &#xF073; INFORMATION TH EORY AND COMPLEXITY &#xF073; PH O TO N ICS AN D O PTICA L EN G IN EERIN G &#xF073; ELECTRONICS AND TELECOMMUNICATIONS &#xF0", , 1 January 2012 (2012-01-01), XP055085525, Retrieved from the Internet: URL: http://www.aos.ro/site_mod/Publicatii/ 2012/AnaleINFOnr2pe2012.pdf [retrieved on 2013-10-28]**

## Description

## BACKGROUND

Galvanic oxygen sensors are widely applied in high volumes in industrial, environmental and medical measurements. Galvanic sensors can have high reliability and a good response time. However, some known sensors require the use of dangerous compounds that are potentially harmful to the manufacturer, the user, and the environment. WO 2013/039414 discloses an electrochemical galvanic oxygen sensor comprising a lead-free anode and alkali electrolyte and a carbon platinised with the platinum cathode with a nickel wire current collector.

## SUMMARY

The present invention in its various aspects is as set out in the appended claims. The present disclosure is directed toward a long-life, lead-free, gas (e.g., oxygen) galvanic sensor and method for making the galvanic sensors. The galvanic sensors of the present disclosure provide a lead-free sensor that has an increased lifetime, while maintaining the response time and sensing accuracy of previous galvanic sensors.

## DETAILED DESCRIPTION OF THE DRAWINGS

The embodiments of the present disclosure will be described, by way of example only, by reference to the FIGS. 1-3 of the accompanying drawings in which:

FIG. 1 shows a cross-sectional view of a galvanic gas sensor, in accordance with at least one example of the present disclosure.
FIG. 2 shows a Pourbaix diagram for antimony in aqueous solutions.
FIG. 3 show a flow diagram for a method, in accordance with at least one example of the present disclosure.

## DETAILED DESCRIPTION

As discussed herein, the present disclosure is directed to long-life, lead-free, gas (e.g., oxygen) galvanic sensors and methods for making the galvanic sensors. The galvanic sensors of the present disclosure can provide a lead-free sensor that has an increased lifetime, while maintaining the response time and sensing accuracy of previous galvanic sensors.

In previous approaches, lead had been used as the anode material because of the reliability, stability, and ease of manufacture of lead. However, lead is known to be a toxic material that, even in relatively low chronic doses, can be harmful to humans. Regulations regarding limits for lead and lead containing substances in the environment have been repeatedly lowered, even prohibited in some areas.

The galvanic sensors of the present disclosure provide a replacement for the lead anode, while increasing the lifetime of the galvanic sensors and maintaining the response time and sensing accuracy. The galvanic sensors of the present disclosure can provide a lifetime of, for example, five years. The anode disclosed in the present disclosure can be used as a drop-in replacement for existing portable gas detection instruments, which is advantageous since other components of currently existing sensors do not have to be altered to be converted to a lead-free sensor.

The galvanic sensor of the present disclosure can minimize anode passivation and thus can extend the lifespan of the sensor over previous galvanic sensors. The galvanic sensor of the present disclosure can control the competition between the rate of passivation production and its removal, where the removal rate of the passivation layer is greater than the rate of the passivation layer formation during the operation of the galvanic sensor. This can be obtained in part by sensor current in the limiting current region and by increasing the surface area of the anode. The galvanic sensor of the present disclosure provides for the reduced rate of passivation layer formation due to passivation distribution on the increased surface area. Additionally, the galvanic sensors of the present disclosure include an electrolyte that ensures that the etching rate of the passivation layer is greater than the rate of the passivation layer formation. The galvanic sensor of the present disclosure can increase the lifespan (e.g., greater than four years) of sensors that are lead-free.

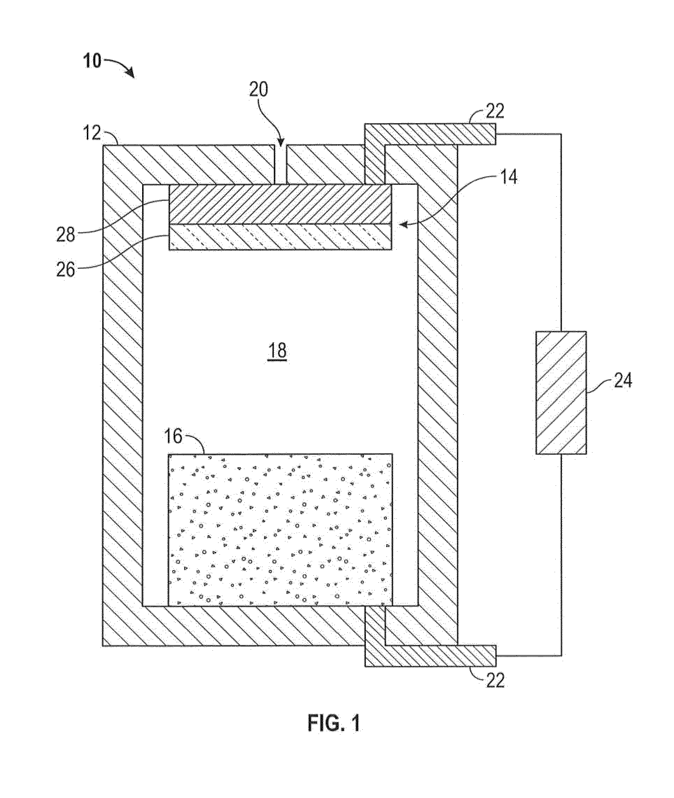

FIG. 1 shows a cross-sectional view of a galvanic sensor (also referred to as "sensor"), in accordance with at least one example of the present disclosure. The sensor 10 includes a housing 12. The housing 12 includes an anode 16, a cathode 14, and an electrolyte 18. The cathode 14 and anode 16 can be coupled to an external load resistor 24 (e.g., 100 ohms) via a set of wire collectors 22 (e.g., nickel wire connectors). In addition, while the current collector 22 of FIG. 1 shows a very specific structure, the current collector 22 is contemplated to include any structure whereby electrical connection is made from an external circuit to the electrode(s) including, but not limited to, a metal wire feeding from the exterior of the sensor housing to said electrode or an extension of the electrode itself to the exterior of the sensor housing.

The sensor 10 may be provided with a diffusion control device associated with the housing 12 (e.g., a lid of the housing 12). The diffusion control device may be a capillary 20 extending through the housing 12 with a predetermined diameter and length and/or a diffusion membrane 28 attached to a electrocatalyst layer 26. The diffusion membrane 28 can have a predetermined permeability which limits air admission to electrocatalyst layer 26, and/or a solid diffusion barrier in which oxygen is soluble and mobile. As discussed herein, the galvanic sensor 10 of the present disclosure can provide a lead-free, drop-in replacement for current portable sensors that can have a lifetime of greater than four years, for example, five years.

Anode Construction

The anode 16 of the present disclosure can be selected such that the risk of corrosion with hydrogen generation is minimized. In an example, antimony (Sb) can form the anode 16. In an example, the anode 16 can include substantially pure antimony. The term "substantially" as used herein refers to a majority of, or mostly, as in at least about 50%, 60%, 70%, 80%, 90%, 95%, 96%, 97%, 98%, 99%, 99.5%, 99.9%, 99.99%, or at least about 99.999% or more. In an example, the anode 16 can be made from an antimony-bismuth alloy. The antimony-bismuth alloy used to form the anode 16 can include antimony within a range of from about 90 weight percent (wt. %) to about 99 wt. %), for example about 90 wt. %, about 91 wt. %, about 92 wt. %, about 93 wt. %, about 94 wt. %, about 95 wt. %, about 96 wt. %, about 97 wt. %, about 98 wt. % and, about 99 wt. %. The antimony-bismuth alloy used to form the anode 16 can include bismuth within a range of from about 1 wt. % to about 10 wt. %, for example about 1 wt. %, about 2 wt. %, about 3 wt. %, about 4 wt. %, about 5 wt. %, about 6 wt. %, about 7 wt. % about 8 wt. %, about 9 wt. %and, about 10 wt. %.

Increasing the lifetime of the sensor 10 can be achieved by increasing the surface area of the anode 16, which is consumable during use. For example, the surface area of the anode 16 can be greater than 10 centimeters squared ($cm^2$). In an example, the surface area of the anode 16 can be within a range of from 10 $cm^2$ to about 60 $cm^2$, for example, from about 15 $cm^2$ to about 55 $cm^2$, such as about 25 $cm^2$, about 35 $cm^2$, about 45 $cm^2$, and about 50 $cm^2$. However, antimony can be a brittle material and cannot be formed into a wire or mesh like other materials, for example, tin. However, the surface area of the anode 16 formed from antimony or the antimony-bismuth alloy can be achieved by the methods described herein.

In an example, not according to the invention, the anode 16 can be formed from a plurality of particles. The plurality of particles can include particles of pure antimony (e.g., antimony), particles of the antimony-bismuth alloy, and combinations thereof. The plurality of particles can have a diameter of less than about 2 millimeters (mm). For example, the plurality of particles can have a diameter within a range of from 0.1 mm to about 2 mm. In an example, the diameter of the plurality of particles can be less than about 1 mm. In an example, the plurality of particles can have an average diameter of less than about 2 mm, for example, about 2 mm, about 1.9 mm, about 1.8 mm, about 1.7 mm, about 1.6 mm, about 1.5 mm, about 1.4 mm, about 1.3 mm, about 1.2 mm, about 1.1 mm, about 1.0 mm, about 0.9 mm, about 0.8 mm, about 0.7 mm, about 0.7 mm, about 0.7 mm, about 0.6 mm, about 0.5 mm, about 0.4 mm, about 0.3 mm, about 0.2 mm, and about 0.1 mm.

In an example, not according to the invention, the anode 16 utilized in the sensor 10 can be formed by sintering the plurality of particles at a temperature below the melting point of the material of the plurality of particles. In an example, the sintering can be done in a non-oxidizing inert ambient, with respect to the material of particles (e.g., antimony and/or antimony-bismuth alloy). For example, when the plurality of particles are antimony, the temperature can be less than 630 degrees Celsius (°C). In an example, the temperature can be within a range of from about 350 °C to about 600 °C. When the plurality of particles are antimony, the inert ambient can be, for example, argon. When the plurality of particles are the antimony-bismuth alloy, the temperature can be below 271 °C and the inert ambient can be, for example, argon. Other non-oxidizing inert ambients are possible.

Sintering the plurality of particles can create some deformation and interdiffusion of the particles around the points of contact between the plurality of particles. The sintering can be performed to impart sufficient strength to the anode 16 structure, without materially altering the particle size (e.g., diameter), thereby essentially preserving the surface area of the anode 16. In an example, after sintering, the plurality of particles may include a variety of shapes that are not substantially circular particles. However, the sintered particles can have a long dimension that is equal to or less than about 3 mm. In an example, the long dimension of the sintered particles can be equal to or less than about 2.8 mm, for example, about 2.7 mm, about 2.6, about 2.5 mm, about 2.4 mm, about 2.3 mm, about 2.2 mm, 2.1 mm, about 2.0 mm, about 1.9 mm, less than about 1.8 mm, about 1.7 mm, about 1.6 mm, about 1.5 mm, about 1.4 mm, about 1.3 mm, about 1.2 mm, about 1.1 mm, about 0.9 mm, about 0.8 mm, about 0.7 mm, about 0.6 mm, about 0.5 mm, about 0.4 mm, about 0.3 mm, about 0.2 mm, and about 0.1 mm.

In an example, not according to the invention, the plurality of particles can also be mechanically pressed to form the anode 16 having a surface area of greater than 10 $cm^2$. Mechanically pressing can include applying pressure to the plurality of particles to compact the loose particles. Various methods to mechanically press the plurality of particles can be utilized. For example, cold die compaction, isostatic pressing, powder rolling, and powder extrusion can be used to mechanically press the plurality of particles to form the anode 16.

In an example, the anode 16 can be formed from a rod having a plurality of holes. For example, the rod can be formed of antimony or the antimony-bismuth alloy. A plurality of holes can be drilled into the rod. For example, the holes may be formed by either laser drilling or mechanical drilling. Other drilling mechanism can be used. In an example, the plurality of holes can have a diameter within a range of from about 0.5 mm to about 2 mm, for example, from about 0.6 mm to about 1.9 mm such as about 0.8 mm, about 0.9 mm, about 1.0 mm, about 1.1 mm, about 1.2 mm, about 1.3 mm, about 1.4 mm, about 1.5 mm, about 1.6 mm, and about 1.7 mm, about 1.8 mm, and about 1.9 mm.

Cathode Construction

The cathode 14 of the present disclosure can be a gas diffusion electrode and includes platinum, silver, gold, and combinations thereof. In an example, the cathode 14 can include an electrocatalyst layer 26 and a membrane 28. In one example, the electrocatalyst layer 26 can include a platinum component and a polytetrafluoroethylene (PTFE) component. The platinum component can include platinum within a range of from about 1 wt. % to about 100 wt. %. While FIG. 1 is discussed with reference to a platinum component, it is understood that the cathode 14 can include silver or gold. In that instance, the electrocatalyst layer 26 includes either a silver component or a gold component instead of the platinum component.

In an example where the electrocatalyst layer 26 includes platinum, the platinum component can include, platinum particles, platinized carbon powder, or a mixture of platinum and carbon. In an example, the platinum component can include platinum within a range of from about 1.0 wt. % to about 99 wt. % and carbon within a range of from about 99 wt. % to about 1.0 wt. % carbon, based on the total weight of the platinum component. In an example, the platinum component can include platinum within a range of from about 1.0 wt. % to about 5.0 wt. % and carbon within a range of from about 99 wt. % to about 95 wt. %, based on the total weight of the platinum component. For example, the platinum component can include platinum within a range of from about 1.0 wt. % to about 5.0 wt. %, for example, about 1.5 wt. %, about 2.0 wt. %, about 2.5 wt. %, about 3.0 wt. %, about 3.5 wt. %, about 4.0 wt. %, and about 4.5 wt. %.

In an example, the PTFE component of the electrocatalyst layer 26 can include particles of PTFE. In such an example, the platinum component (e.g., platinum is mixed with carbon, where platinum weight percent in carbon is from 1wt. % to 10 Wt.%) and the platinum component can be mixed with the PTFE component (e.g., PTFE particles), where the PTFE weight percent is about 50% based on the total weight of the electrocatalyst layer 26 (e.g., the platinum component and the PTFE component). Thus, the electrocatalyst layer 26 can include particulate PTFE within a range of from about 40 to 60 wt. %, for example, about 45 wt.% , about 50 wt.%, and about 55 wt.%, based on a total weight of the PTFE component and the platinum component.

In an example, the platinum and carbon can aggregate together with the PTFE particles to form the electrocatalyst layer 26. During sensor 10 operation, a "three-phase interface" can form at the cathode 14, where gas (e.g., oxygen), liquid (the electrolyte 18), and solid electrocatalyst layer 26 can coexist. At this three-phase interface the electrochemical process of cathodic oxygen reduction can occur by means of electrons supplied by the anode 16, via the external circuit.

In an example, the electrocatalyst layer 26 can includes 100 wt. % platinum. In that instance, the electrocatalyst layer 26 will not include carbon in the platinum component or the PTFE component. That is, the platinum component is formed of substantially pure platinum particles. In another example, the platinum component containing pure platinum particles can be mixed with the PTFE component (e.g., PTFE particles) to form the electrocatalyst layer 26. For example, when the electrocatalyst layer 26 does not include carbon, electrocatalyst layer 26 includes the platinum component formed of platinum powder and the PTFE component formed of PTFE particles. As discussed herein, the electrocatalyst layer 26 can also be formed with silver and or gold instead of platinum and can be a wire mesh or in particulate form.

In an example, the electrocatalyst layer 26 can be bonded to the membrane 28 to form the cathode 14 (e.g., a gas diffusion electrode). The membrane 28 can be a micro-porous, PTFE membrane. The membrane 28 can be positioned on a superior side of the electrocatalyst layer 26. An inferior surface of the electrocatalyst layer 26 can contact the electrolyte 18. The membrane 28 can act as a mechanical support for the electrocatalyst layer 26 and facilitate oxygen diffusion to the reaction sites, while preventing the electrolyte (e.g., an aqueous solution) from leaking out of the cell. In other example, the membrane 28 can be a solid PTFE diffusion barrier.

Capillary

As discussed herein, the sensor 10 may be provided with a diffusion control device. In one example, the diffusion control device of the sensor 10 can be a capillary 20. In another example, the diffusion control device of the sensor 10 can be a diffusion membrane (e.g., the solid PTFE diffusion barrier) of a predetermined permeability. In that instance, the sensor 10 can be formed without the capillary.

In one example, the diffusion control device can include the capillary 20 extending through the housing 12 (e.g., extending through a sensor lid).. The design of the capillary 20 (e.g., length and diameter) can affect the sensors 10 current and sensors 10 quality. In an example, the diameter of the capillary 20 can be within a range of from 10 micrometers ($\mu$m) to about 100 $\mu$m, for example, from about 10 $\mu$m to about 40 $\mu$m. In one example, the diameter of the capillary 20 can be constant. In another example, the diameter of the capillary 20 can vary. For example, an upper diameter can be about 50 $\mu$m and a lower diameter can be about 40 $\mu$m. In another example, the upper diameter can be about 40 $\mu$m and the lower diameter can be about 50 $\mu$m. The length of the capillary 20 can be within a range of from about 1.5 mm to about 3 mm, for example, about 2.0 mm to about 2.5 mm, such as about 2.1 mm, about 2.2 mm, about 2.3 mm, and about 2.4 mm. In one example, the diameter is 50 $\mu$m and the length is 3 mm.

Electrolyte

The electrolyte 18 used for the sensor 10 described herein can include electrolytes where an etching rate of the passivation is greater than the rate of passivation formation. In an example, the electrolyte 18 can be an aqueous solution of 0.5 M- 4.0 M phosphoric acid and of 0.001 M - 2 M potassium fluoride. The electrolyte can have a pH within a range of about 1.3 to about 2.5.

In an example, the electrolyte 18 can be an aqueous solution of 4.0 M potassium hydroxide and of 1 M - 4 M potassium fluoride. The electrolyte 18 can have a pH within a range of about 12 to about 13.5.

In an example, the electrolyte 18 can be an aqueous solution of 4.0 M potassium fluoride and of 1 M - 4 M potassium acetate. The electrolyte 18 can have a pH within a range of about 9 to about 10.

In an example, the electrolyte 18 can be an aqueous solution of 4 M potassium fluoride. The electrolyte 18 can have a pH within a range of about 8.5 to about 9.

In an example, the electrolyte 18 can be an aqueous solution of 4.0 M - 8.0 M potassium hydroxide and of 0.01 M - 1 M potassium fluoride. The electrolyte 18 can have a pH within a range of about 12 to about 13.

In an example, the electrolyte 18 can be an aqueous solution of 4.0 M potassium hydroxide and of 1 M - 4 M potassium fluoride. The electrolyte 18 can have a pH within a range of about 12 to about 13.5.

In an example when the anode 18 includes bismuth, the electrolyte 18 can be an aqueous solution of 0.0025 M sulfuric acid and 0.01 - 1.0 M potassium fluoride. The electrolyte 18 can have a pH within the range of about 1.8 to about 2.2.

Life Span of Anode

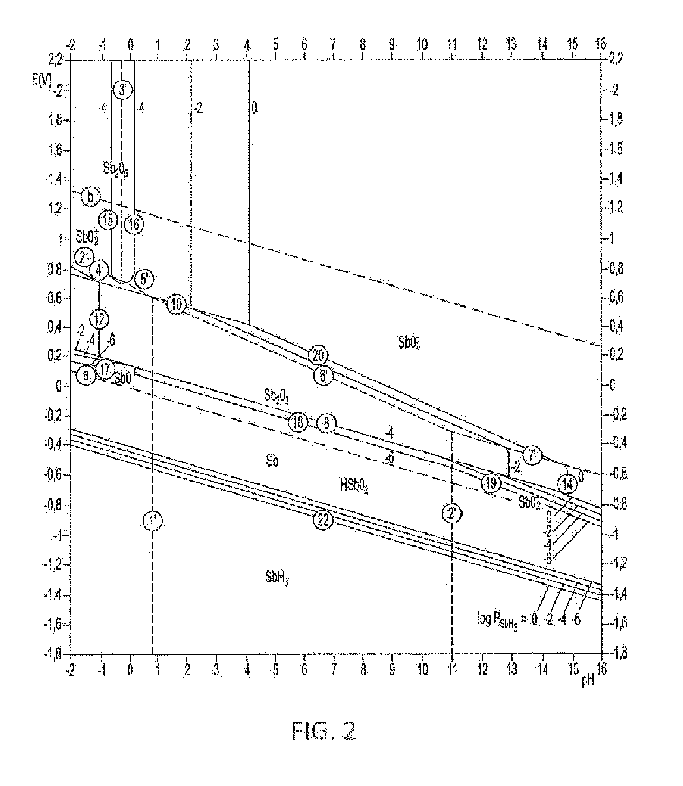

The sensor 10 of the present disclosure can have a life span of approximately 5 years. FIG. 2 shows a Pourbaix diagram for antimony in aqueous solutions. Antimony is a noble metal (thermodynamically stable in water) in the whole pH range of from -2 to +16. An alkaline or acid electrolyte can be used as the electrolyte 18 in the sensor 10. It can be seen that there is no self-corrosion due to $H_2$ evolution at the anode or self-corrosion due to $H_2$ evolution at the cathode.

The process of oxygen sensing (detection) may be characterized as follows.

**Cathode:**

- Carbon platinized with 5% platinum is used for $O_2$ reduction reaction

$$O_2+2H_2O+4e^-=4OH^- \qquad \text{equation } [1]$$

**Anode:**

- Pure antimony for *antimony oxidation reaction with 3 electron production per each Sb atom*

$$2\,Sb + 3H_2O=Sb_2O_3 +6H^++6e^- \qquad \text{equation } [2]$$

**Cell reaction:**

$$2\text{ Sb}+3\text{O}_2 =2\text{ Sb}_2\text{O}_3 \qquad\qquad\qquad \text{equation [3]}$$

**Electrolyte:**

- An alkaline electrolyte like potassium acetate ($CH_3COOK$) (KOAc), KOH or organic bases (like ammonium quaternary hydroxide ($R4N\ OH^-$) with pH in the range from 7 to 14 can be used for the oxygen sensor 10. The oxidation reaction products are soluble in the electrolyte. As such, a fast response time of the sensor may be obtained.
- In the case of alkali electrolyte, according to the equilibrium reactions theory, a 3-electron $Sb/Sb_2O_3$ reaction (equation [3]) may take place, while the electrode potential of the anode will lay at 0.1 V vs NHE, which is a more cathodic potential with respect the Pb (0.25 V vs NHE), Cu (0.47 V vs NHE) or Bi (0.37 V vs NHE) potentials when immersed in the same electrolyte (*see* Fig 1 of the publication Atlas of Electrochemical Equilibria in Aqueous Solutions, 1974, page 527). All the above potential values are estimated with respect to the Normal Hydrogen Electrode (NHE), by using Pourbaix diagrams of those chemical elements.

A coulombic characterization of the antimony-alkaline electrolyte oxygen galvanic sensor 10 for the case of a sensor current of 100 microamperes and with an operation time of five years may be illustrated as follows. In this regard, the molar mass of antimony (Aw) = 121.76 g/mole; the Faraday constant (F) =96485 Coulomb/mole; and the number of electrons released by dissolution of one atom of antimony (n) = 3, according to the theoretical predictions.

In this case, the equivalent weight, Aw/n=40.58 and the capacity (A hr/g)=n *F/(Aw * 3600)=0.66 (which is higher than in the case of lead in the same electrolyte (0.258 A*hr/g)). The sensor current, I=100 microamperes ($\mu$A) in the case of continuous sensor operation for 5 years. Using this information, the minimum weight of an anode 16 may be calculated. In this regard, the antimony anode 16 weight =31.536 Aw I t/nF = 6.5 grams, where t is given in years, (5 years for this calculation) and I is given in microamperes (100 $\mu$A). In contrast, a lead anode weight may be calculated. For example, the lead anode weight =31.536Aw I t/nF = 16.9 grams, where t is given in years, (5 years for this calculation) and I is given in microamperes (100 $\mu$A). Thus, the antimony mass for 5-year operation in alkali (which is 6.5 grams) is less than the 16.9 grams for a lead anode or, in another calculation, 10.5 grams needed for a copper anode in the same electrolyte.

<u>Method</u>

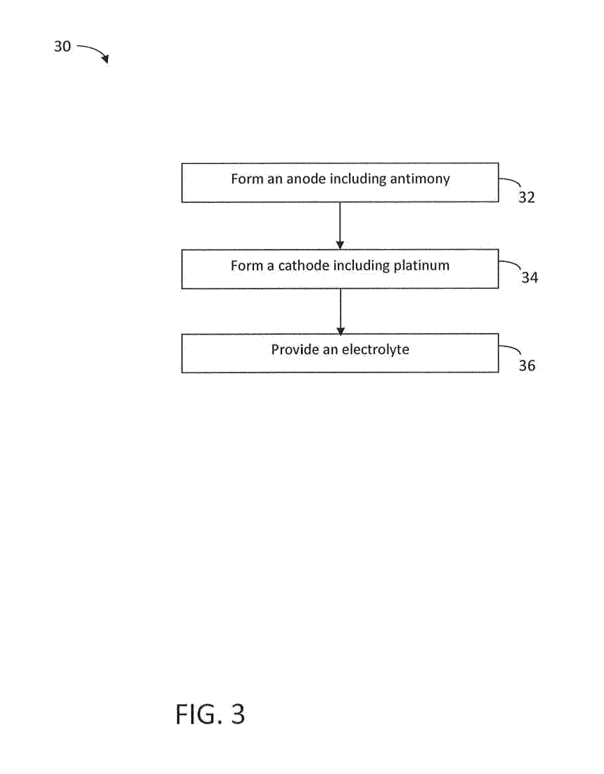

FIG. 3 shows a flow diagram of a method 30 of forming an oxygen sensor, in accordance with at least one example of the present disclosure. For example, method 30 can be used to form sensor 10 in FIG. 1. At step 32, method 30 can include forming an anode including antimony, such as anode 16 in FIG. 1. At step 34, method 30 can include forming a cathode including platinum. At step 36, method 30 can include providing an electrolyte. The method can also include providing a housing such as housing 12, as described above.

The anode 16 can be substantially free from lead and can have a surface area greater than 10 centimeters squared. In an example, forming the anode 16 can include sintering a plurality of antimony particles at a temperature within a range of from 350 °C to about 600 °C and in an inert ambient with respect to antimony. The plurality of antimony particles can have a diameter of less than 2 millimeters.

In an example, not according to the invention, forming the anode 16 can include mechanically pressing a plurality of antimony particles at approximately 21 °C, where plurality of antimony particles have a diameter of less than 2 millimeters. In an example, forming the anode 16 can include drilling an antimony rod to form a plurality of holes in the antimony rod. Drilling can be selected from one of: laser drilling and mechanical drilling. The diameter of the plurality of holes can be within a range of from 0.5 millimeters to 2 millimeters.

**Claims**

1. A galvanic sensor (10) comprising:

a housing (12)
an anode (16)
including antimony, the anode including a plurality of holes

extending through the anode, the plurality of holes having a diameter within a range of from 0.5 millimeters to about 2 millimeters, wherein the anode is substantially free from lead;
a cathode (14) including at least one of platinum, silver and gold; and
an electrolyte (18).

2. The galvanic sensor of claim 1, wherein a surface area of the anode (16) is within a range of from about 10 centimeters squared to about 60 centimeters squared.

3. The galvanic sensor of claim 1 or claim 2, wherein the surface area of the anode (16) is approximately 50 centimeters squared.

4. The galvanic sensor of any one of claims 1 through 3, wherein the anode (16) is formed from substantially pure antimony.

5. The galvanic sensor of any one of claims 1 through 4, wherein the anode (16) is formed from an antimony-bismuth alloy.

6. The galvanic sensor of claim 5, wherein the antimony-bismuth alloy includes antimony within a range of from about 90 weight percent to about 99 weight percent and bismuth within a range of from about 1 weight percent to about 10 weight percent.

7. The galvanic sensor of any one of claims 1 through 6, wherein the cathode (14) is a gas diffusion electrode comprising an electrocatalyst layer (26) and a membrane, the electrocatalyst layer (26) including a platinum component and a polytetrafluoroethylene component.

8. The galvanic sensor of claim 7, wherein the platinum component includes platinum within a range of from about 1.0 weight percent to about 5.0 weight percent and carbon within a range of from about 99 weight percent to about 95 weight percent.

9. The galvanic sensor of any one of claims 1 through 8, wherein the electrolyte (18) is selected from at least one of: 1) an aqueous solution of potassium hydroxide, 2) an aqueous solution potassium hydroxide and potassium fluoride, 3) an aqueous solution of potassium acetate and potassium fluoride, and 4) an aqueous solution of potassium fluoride.

10. A method of forming an oxygen sensor 10, the method comprising:

forming an anode (16)
by drilling a rod including antimony to form a plurality of

holes in the rod, the plurality of holes having a diameter within a range of from 0.5 millimeters to 2 millimeters, wherein the anode (16) is substantially free from lead and has a surface area greater than 10 centimeters squared;

forming a cathode (14) including platinum; and
providing an electrolyte (18).

11. The method of claim 10,
wherein the drilling is selected from one of:

laser drilling and mechanical drilling.

**Patentansprüche**

1. Galvanischer Sensor (10), umfassend:

ein Gehäuse (12),
eine Anode (16), die Antimon enthält, wobei die Anode eine Vielzahl von Löchern aufweist, die durch die Anode verlaufen, wobei die Vielzahl von Löchern einen Durchmesser in einem Bereich von 0,5 Millimeter bis etwa 2 Millimeter aufweist, wobei die Anode im Wesentlichen frei von Blei ist;
eine Kathode (14), die wenigstens eines von Platin, Silber und Gold enthält; und
einen Elektrolyten (18).

2. Galvanischer Sensor gemäß Anspruch 1, wobei die Oberfläche der Anode (16) in einem Bereich von etwa 10 Quadratzentimeter bis etwa 60 Quadratzentimeter beträgt.

3. Galvanischer Sensor gemäß Anspruch 1 oder Anspruch 2, wobei die Oberfläche der Anode (16) etwa 50 Quadratzentimeter beträgt.

4. Galvanischer Sensor gemäß einem der Ansprüche 1 bis 3, wobei die Anode (16) aus im Wesentlichen reinem Antimon besteht.

5. Galvanischer Sensor gemäß einem der Ansprüche 1 bis 4, wobei die Anode (16) aus einer Antimon-Wismut-Legierung besteht.

6. Galvanischer Sensor gemäß Anspruch 5, wobei die Antimon-Wismut-Legierung Antimon in einem Bereich von etwa 90 Gewichtsprozent bis etwa 99 Gewichtsprozent und Wismut in einem Bereich von etwa 1 Gewichtsprozent bis etwa 10 Gewichtsprozent enthält.

7. Galvanischer Sensor gemäß einem der Ansprüche 1 bis 6, wobei die Kathode (14) eine Gasdiffusionselektrode ist, die eine Elektrokatalysatorschicht (26) und eine Membran umfasst, wobei die Elektrokatalysatorschicht (26) eine Platinkomponente und eine Polytetrafluorethylenkomponenten enthält.

8. Galvanischer Sensor gemäß Anspruch 7, wobei die Platinkomponente Platin in einem Bereich von etwa 1,0 Gewichtsprozent bis etwa 5,0 Gewichtsprozent und Kohlenstoff in einem Bereich von etwa 99 Gewichtsprozent bis etwa 95 Gewichtsprozent enthält.

9. Galvanischer Sensor gemäß einem der Ansprüche 1 bis 8, wobei der Elektrolyt (18) ausgewählt ist aus wenigstens einem von: 1) einer wässrigen Lösung von Kaliumhydroxid, 2) einer wässrigen Lösung von Kaliumhydroxid und Kaliumfluorid, 3) einer wässrigen Lösung von Kaliumacetat und Kaliumfluorid und 4) einer wässrigen Lösung von Kaliumfluorid.

10. Verfahren zum Herstellen eines Sauerstoffsensors (10), wobei das Verfahren umfasst:

Herstellen einer Anode (16) durch Bohren eines Stabs, der Antimon enthält, um eine Vielzahl von Löchern in dem Stab zu bilden, wobei die Vielzahl von Löchern einen Durchmesser in einem Bereich von 0,5 Millimeter bis etwa 2 Millimeter aufweist, wobei die Anode (16) im Wesentlichen frei von Blei ist und eine Oberfläche von mehr als 10 Quadratzentimeter aufweist;
Herstellen einer Kathode (14), die Platin enthält; und
Bereitstellen eines Elektrolyten (18).

11. Verfahren gemäß Anspruch 10,
wobei das Bohren ausgewählt ist aus einem von: Laserbohren und mechanischem Bohren.

**Revendications**

1. Capteur galvanique (10) comprenant :

un boîtier (12) ;
une anode (16) comportant de l'antimoine, l'anode comportant une pluralité de trous s'étendant à travers l'anode, la pluralité de trous ayant un diamètre dans une gamme de 0,5 millimètre à environ 2 millimètres, l'anode étant sensiblement dépourvue de plomb ;
une cathode (14) comportant au moins un élément parmi le platine, l'argent et l'or ; et

un électrolyte (18).

2. Capteur galvanique de la revendication 1, dans lequel la surface de l'anode (16) se situe dans une gamme d'environ 10 centimètres carrés à environ 60 centimètres carrés.

3. Capteur galvanique de la revendication 1 ou la revendication 2, dans lequel la surface de l'anode (16) est d'environ 50 centimètres carrés.

4. Capteur galvanique de l'une quelconque des revendications 1 à 3, dans lequel l'anode (16) est formée à partir d'antimoine sensiblement pur.

5. Capteur galvanique de l'une quelconque des revendications 1 à 4, dans lequel l'anode (16) est formée à partir d'un alliage antimoine-bismuth.

6. Capteur galvanique de la revendication 5, dans lequel l'alliage antimoine-bismuth comporte de l'antimoine dans une gamme d'environ 90 pour cent en poids à environ 99 pour cent en poids et du bismuth dans une gamme d'environ 1 pour cent en poids à environ 10 pour cent en poids.

7. Capteur galvanique de l'une quelconque des revendications 1 à 6, dans lequel la cathode (14) est une électrode à diffusion gazeuse comprenant une couche d'électrocatalyseur (26) et une membrane, la couche d'électrocatalyseur (26) comportant un composant de platine et un composant de polytétrafluoroéthylène.

8. Capteur galvanique de la revendication 7, dans lequel le composant de platine comporte du platine dans une gamme d'environ 1,0 pour cent en poids à environ 5,0 pour cent en poids et du carbone dans une gamme d'environ 99 pour cent en poids à environ 95 pour cent en poids.

9. Capteur galvanique de l'une quelconque des revendications 1 à 8, dans lequel l'électrolyte (18) est choisi à partir d'au moins une solution parmi : 1) une solution aqueuse d'hydroxyde de potassium, 2) une solution aqueuse d'hydroxyde de potassium et de fluorure de potassium, 3) une solution aqueuse d'acétate de potassium et de fluorure de potassium, et 4) une solution aqueuse de fluorure de potassium.

10. Procédé de formation d'un capteur d'oxygène (10), le procédé comprenant :

la formation d'une anode (16) par perçage d'une tige comportant de l'antimoine pour former une pluralité de trous dans la tige, la pluralité de trous ayant un diamètre dans une gamme de 0,5 millimètre à 2 millimètres, l'anode (16) étant sensiblement dépourvue de plomb et ayant une surface supérieure à 10 centimètres carrés ;
la formation d'une cathode (14) comportant du platine ; et
l'obtention d'un électrolyte (18).

11. Procédé de la revendication 10,
dans lequel le perçage est choisi entre le perçage au laser et le perçage mécanique.

**FIG. 1**

FIG. 2

30

```
┌─────────────────────────────────────────┐
│     Form an anode including antimony      │
└─────────────────────────────────────────┘  32
                    │
                    ▼
┌─────────────────────────────────────────┐
│    Form a cathode including platinum      │
└─────────────────────────────────────────┘  34
                    │
                    ▼
┌─────────────────────────────────────────┐
│          Provide an electrolyte           │
└─────────────────────────────────────────┘  36
```

FIG. 3

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2013039414 A

**Non-patent literature cited in the description**

- Atlas of Electrochemical Equilibria in Aqueous Solutions. 1974, 527